# EUROPEAN PATENT APPLICATION

(11) **EP 0 937 551 A1**
(43) Date of publication of application: **25.08.1999**
(21) Application number: 98931097.4
(22) Date of filing: 14.07.1998
(51) Int. Cl.: B25J 19/00

(54) **SHIELDED INDUSTRIAL ROBOT**

(30) Priority: 14.07.1997 JP 20521497
(71) Applicant: FANUC LTD, Minamitsuru-gun, Yamanashi 401-0597 (JP)
(72) Inventor: KINOSHITA, Satoshi, R.9-306 Fanuc Manshonharimomi, Yamanashi 401-0511 (JP); SUGIYAMA, Hideki, R.12-606, Fanuc Manshonharimomi, Yamanashi 401-0511 (JP)
(74) Representative: Billington, Lawrence Emlyn
(86) International application number: JP9803155
(87) International publication number: WO9903653

(57) **Abstract**

A shielded robot capable of preventing entry and emission of foreign matter between interior and exterior of the robot and suited for use in food processing, production, etc. A cover (10) constituted by covering elements made of anodized aluminum, stainless steel or the like covers almost the entirety of a robot body (1) placed on an installation surface(5), thereby isolating the robot body (1) from the exterior. A working tool (7), which is attached to a working tool attachment face (6a), is exposed to the outside and orientation thereof can be adjusted. The covering elements are fixed by bolts (4) with a washer (4a) interposed therebetween, a plane packing (3) is interposed between the covering elements, and also a rotary seal (2) is interposed between those covering elements which are subjected to rotation. Materials of confirmed harmlessness to human body are used as parts which are liable to abrade and lubricating oil.

## Description

### Technical Field

The present invention relates to an industrial robot, and more particularly to a shielded robot for use in an environment where the robot is possibly wetted with water during processing, production, packaging, shipping, etc. of foods, medical articles or sanitary articles.

### Background Art

A robot for handling articles of diet, medical articles or sanitary articles is required not to contaminate an environment for handling the articles by abraded powder produced from movable parts of the robot or by lubricating oil. At the same time, it is necessary to eliminate small gaps to facilitate cleaning of extraneous matter such as pieces of food adhered to the robot, and also necessary to prevent corrosion or growth of bacteria in water, pieces of food, etc. collected in recesses.

In order to manufacture robots meeting such requirements, shapes of large-sized parts such as arms, surface treatment, lubricating oil and quality of rubber for sealing need to be changed, to cause a problem that the robots are made much expensive compared with ordinary industrial robots and that the manufacturing efficiency is low.

As means for securing waterproofness, there is known a method of covering a robot with a jacket, but the jacket is disadvantageous in that it is liable to wrinkle and be torn, and difficult to wash. Especially in a robot for use in a food processing or production site where the robot is possibly wetted with water, the use of the jacket is not preferable in view of hygiene since the jacket is liable to wrinkle and difficult to wash.

### Disclosure of Invention

The object of the present invention is to provide a shielded robot which has excellent characteristics in terms of safety and hygiene and receives no adverse influences such as rust, short circuit of an electric system, etc. even when used in an environment in which the robot is possibly wetted with water, without the need to greatly change shape or structure of conventional robots.

The present invention provides a shielded industrial robot having at least three degrees off freedom and an arm with a distal end to which a working tool is to be attached, wherein an outer surface of at least a portion of the robot including a third axis and any axis subsequent to the third axis is covered with a cover, to thereby prevent entry of liquid from outside and emission of harmful component from an interior of the robot to outside. Preferably, at least one degree of freedom is provided at the distal end of the arm which has three degrees off freedom, so that an orientation of the working tool is changeable.

Also it is preferable that a rotary seal is provided at a rotating part, and a plane packing and a metal cover are fixed by a bolt at a joint of the cover with a washer having a sealing function interposed therebetween. The rotary seal, the plane packing and the washer are preferably made of a material harmless to human body, which has been confirmed in advance. A typical material for the cover includes anodized aluminum and stainless steel. These materials are excellent in water resistance and rustproof property.

The robot of the present invention is to be used typically in a food processing or production site. It may be determined whether or not the materials to be used in individual parts are harmful or harmless according to food hygiene tests as provided by notification No. 85 of the Japanese Ministry of Health and Welfare, for example.

According to the present invention, interior and exterior of the robot is perfectly isolated by covering a principal part of the robot with a cover without making a substantial change to the conventional robot structure. Especially, it is possible to improve a function of isolation between the interior and the exterior by providing a rotary seal at a rotating part and by fixing a plane packing and a metal cover by a bolt 4 at a joint of the cover with a washer 4a having a sealing function interposed therebetween.

The function of isolation between the interior and the exterior prevents water or the like from entering the robot from the exterior and also prevents foreign matter (abraded powder from robot parts, lubricating oil, etc.) from being emitted to the exterior from the interior of the robot. Materials of the rotary seal 2, the plane packing 3 and the washer 4a are selected under the condition that these materials are harmlessness to human body, so that the robot can be safely used in a food processing or production site.

### Brief Description of Drawings

FIG. 1 is a sectional view of a robot according to one embodiment of the present invention, taken along a horizontal plane; and
FIG. 2 is a sectional view of the robot shown in FIG. 1, taken along a vertical plane.

### Best Mode of Carrying out the Invention

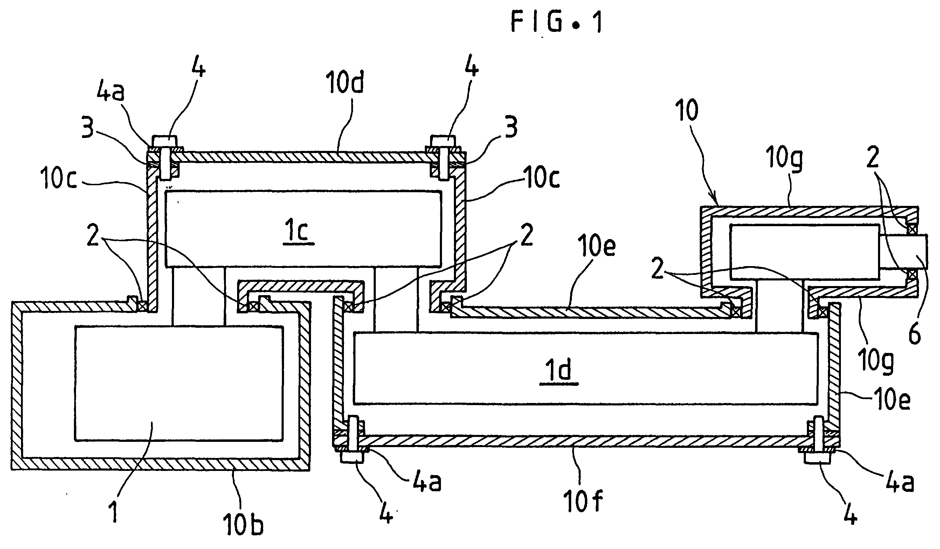

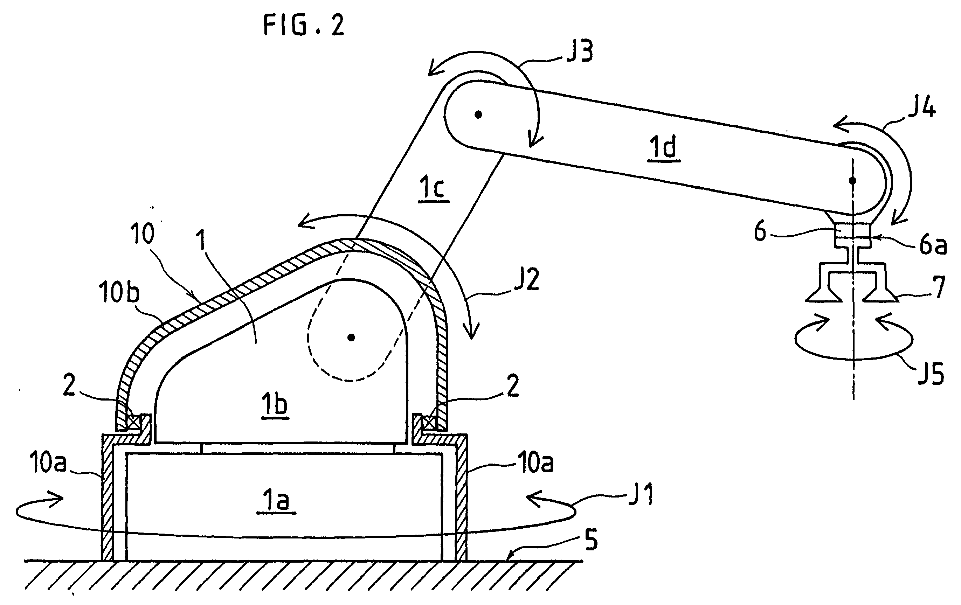

Referring to FIGS. 1 and 2, an embodiment of the present invention will be described.

A robot of this embodiment has a main body 1 similar in structure and external shape to a conventional robot, and a cover covering a principal part of the main body. Specifically, the main body 1 comprises a column 1a placed on an installation surface 5, a swivel trunk 1b rotatably supported on the column 1a and driven through a first axis J1 for swinging motion, a first arm 1c driven through a second axis J2 for swinging motion, a second arm 1d driven through a third axis J3 for swinging motion, ad a working tool attachment section 6 driven through fourth and fifth axes J4 and J5 for swinging motion.

A distal end of the working tool attachment section 6 is formed as a working tool attachment face 6a to which a working tool 7 is attached. Accordingly, the fourth and fifth axes J4 and J5 function as axes of rotation permitting adjustment of the orientation of the working tool 7 attached to the working tool attachment face 6a. As the working tool 7, a variety of tools, for example, a hand with a suction mechanism, a seasoning liquid injector and the like, are used depending on the applications.

A cover 10 is used to cover a principal part of the robot body 1 and in this embodiment, it covers almost the entirety of the robot body 1 except for the part of the working tool attachment section 6. As the material of the cover, anodized aluminum, stainless steel or the like is used in consideration of requirements including harmlessness to the human body, in addition to water resistance and rustproof property.

In order to facilitate the matching of the cover 10 with the contours of the robot body 1, the cover is made up of a suitable number of separate covering elements 10a, 10b, ..., 10g having the flattest possible outer surfaces (having no narrow recesses or grooves), and the covering elements 10a, 10b,..., 10g are fixed to respective suitable positions of the robot body 1 by bolts 4. In this case, to ensure the tightness of the bolt holes, a washer 4a having high sealing performance is interposed between each bolt and a corresponding one of the covering elements 10a, 10b, ....

Also, an plane packing 3 is interposed between the adjacent covering elements 10c and 10d, etc., to ensure the tightness of the joint of the covering elements. Further, a rotary seal 2 such as an oil seal is interposed between those portions of the covering elements which are rotated through the respective axes, whereby the rotating parts also have a tight structure.

Almost all parts of the cover constituted by the covering elements 10a, 10b, ..., 10g can be made of the same material, and it is therefore possible to subject with ease the entire surface of the cover to surface treatment that does not affect the safety of food. Also, the exterior of the robot is simple in structure since the outer exposed surface thereof is composed of the cover, the rotary seals 2 and the plane packings 3, and therefore, a robot having such an external shape that it can be easily washed with water can be produced.

Thus, owing to the shielded structure using the cover, the robot body 1 is shielded from outside, whereby foreign matter is prevented from being emitted to the outside from the robot body 1 and also liquid or powdery foreign matter is prevented from entering the robot body 1 from outside. Foreign matter that can possibly be emitted from the robot body 1 to the outside includes abraded powder produced due to friction of the rotary seals 2 or the plane packings 3, lubricating oil used in the rotary seals 2 etc., and the shielded structure described above makes it possible to almost perfectly eliminate the possibility of such foreign matter becoming mixed with articles being handled, such as food.

In consideration of the worst, the rotary seals 2 and the plane packings 3 are each preferably made of a material of which harmlessness to the human body has been confirmed. As the rotary seals, for example, nitrile rubber of which the contents of harmful components are reduced to low level or fluorine-contained resin (PTFE: polytetrafluoroethylene) may be used.

It is also desirable that the lubricating oil used should be one called food grade lubrication or food grease of which the safety has been confirmed. As such lubricating oil, Amoco FG (Amoco Food Grease; registered trademark) and Nevastane HT/AW (registered trademark), for example, are available.

Foreign matter that may enter the robot body 1 from outside includes liquid or powdery matter in general (water, seasoning liquid, seasoning powder, etc.), pieces of food, etc. If such foreign matter (especially liquid matter such as water) enters the interior of the robot body 1, the robot is adversely affected by rust, fault or short circuit of the electric system, etc. The adverse influence can, however, be avoided by the shielded structure described above.

According to the present invention, entry of foreign matter to the robot body from outside and also emission of foreign matter from the robot body to the outside can be prevented by merely covering the principal part of the robot body with the cover, without the need to greatly change the structure or external shape of the robot body. This permits robots to be introduced at low cost, compared with the case of subjecting the robot body to special surface treatment so that the robot can be used in sites where food or the like is handled.

Also, since almost all parts of the cover can be made of the same material, it is possible to subject with ease the entirety of the cover to surface treatment that does not affect the safety of food. Further, the exterior of the robot has a simple structure because the outer surface thereof is made up of the cover, the rotary seals and the packing seals, and therefore, a robot having such an external shape that it can be easily washed with water can be produced.

## Claims

1. A shielded industrial robot having at least three degrees of freedom and an arm with a distal end to which a working tool is to be attached,
wherein an outer surface of at least a portion of said robot including a third axis and any axis subsequent to the third axis is covered with a cover, to thereby prevent entry of liquid from outside and emission of harmful component from an interior of the robot to outside.

2. A shielded industrial robot according to claim 1, wherein said robot has at least one degree of freedom at the distal end of said arm having three degrees of freedom, so that an orientation of said working tool is changeable.

3. A shielded industrial robot according to claim 1 or 2, wherein a rotary seal is provided at a rotating part, and a plane packing and a metal cover are fixed by a bolt at a joint of said cover with a washer having a sealing function interposed therebetween.

4. A shielded industrial robot according to claim 3, wherein said rotary seal, said plane packing and said washer are made of a material harmless to human body.

5. A shielded industrial robot according to claim 1, wherein said cover is made of anodized aluminum or stainless steel.

6. A shielded industrial robot according to claim 1, wherein said robot is to be used in a site where food is handled.
